# EUROPÄISCHE PATENTANMELDUNG

(11) **EP 3 093 509 A1**
(43) Veröffentlichungstag der Anmeldung: **16.11.2016**
(21) Anmeldenummer: 16168988.0
(22) Anmeldetag: 10.05.2016
(51) Int. Cl.: F16B 39/284, F16B 31/02

(54) **BEFESTIGUNGSVORRICHTUNG**

(30) Priorität: 11.05.2015 DE 102015107359
(71) Anmelder: Hofmann, Christian, 78464 Konstanz (DE); Raible, Moritz, 88662 Überlingen (DE)
(72) Erfinder: Hofmann, Christian, 78464 Konstanz (DE); Raible, Moritz, 88662 Überlingen (DE)
(74) Vertreter: Daub, Thomas

(57) **Zusammenfassung**

Vorgeschlagen wird eine Befestigungsvorrichtung mit einem Gewindeelement (10), das ein Innengewinde (12) umfasst, und mit einem Antriebselement (14), das zu einer Drehmomentübertragung von einem Werkzeug zum Gewindeelement (10) vorgesehen ist, und mit zumindest einer Verformungsfläche (16), die dazu vorgesehen ist, während eines Anzugsvorgangs zumindest eine plastische Deformation am Gewindeelement (10) und/oder am Antriebselement (14) zu erzeugen.

## Beschreibung

### Stand der Technik

Die Erfindung betrifft eine Befestigungsvorrichtung mit einem Gewindeelement.

Es ist bereits eine Befestigungsvorrichtung mit einem Gewindeelement vorgeschlagen worden.

Die Aufgabe der Erfindung besteht insbesondere darin, eine gattungsgemäße Vorrichtung mit verbesserten Eigenschaften hinsichtlich einer Betriebssicherheit und eines Bedienkomforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Es wird eine Befestigungsvorrichtung vorgeschlagen, mit einem Gewindeelement, das ein Innengewinde umfasst, und mit einem Antriebselement, das zu einer Drehmomentübertragung von einem Werkzeug zum Gewindeelement vorgesehen ist, und mit zumindest einer Verformungsfläche, die dazu vorgesehen ist, während eines Anzugsvorgangs zumindest eine plastische Deformation am Gewindeelement und/oder am Antriebselement zu erzeugen. Dadurch kann die Befestigungsvorrichtung in einem Arbeitsgang befestigt und vor einem ungewollten Lösen gesichert werden. Ferner kann ein Erreichen einer vordefinierten Vorspannkraft durch die Deformation von einem Benutzer wahrgenommen werden. Die Vorspannkraft ergibt sich aus einem Anzugsmoment des Antriebselements. Das Gewindeelement ist vorzugsweise ringförmig ausgebildet. Bevorzugt bildet das Gewindeelement eine Konusmutter aus. Das Innengewinde ist vorzugsweise zu einer Aufnahme einer Schraube, insbesondere einer Maschinenschraube, und/oder einer Gewindespindel vorgesehen. Der Anzugsvorgang bildet einen Arbeitsschritt, in welchem eine gewünschte Vorspannkraft erreicht oder überschritten wird. Bei der plastischen Deformation wird das Gewindeelement und/oder das Antriebselement zumindest bereichsweise um zumindest 0,05 mm, bevorzugt um zumindest 0,5 mm, besonders bevorzugt um zumindest 1 mm deformiert. Das Antriebselement ist vorzugsweise aus einem Metall oder aus einer Metalllegierung gebildet. Weiterhin vorteilhaft ist das Antriebselement ringförmig ausgebildet. Das Antriebselement bildet vorzugsweise eine Außensechskantfläche aus. Das Antriebselement ist vorzugsweise zu einer direkten Kopplung mit einem Werkzeug, insbesondere mit einem Schraubenschlüssel, vorgesehen. Vorteilhaft ist das Gewindeelement kraftschlüssig mit dem Antriebselement verbunden. Zusätzlich wird vorgeschlagen, dass das Antriebselement eine Farbbeschichtung umfasst, die dazu vorgesehen ist, bei Erreichen des vordefinierten Anzugsmoments abzuplatzen. Dadurch kann ein Erreichen des vordefinierten Anzugsmoments vorteilhaft visuell wahrgenommen werden bzw. farblich hervorgehoben werden. Alternativ oder zusätzlich wird vorgeschlagen, dass das Antriebselement ein separates Indikatorteil aufweist, das zu einer Anzeige eines Erreichens des vordefinierten Anzugsmoments vorgesehen ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer weiteren Ausgestaltung der Erfindung wird vorgeschlagen, dass die zumindest eine Verformungsfläche vom Gewindeelement ausgebildet ist. Dadurch kann eine konstruktiv besonders einfache Sicherung der Befestigungsvorrichtung erreicht werden.

Weiterhin wird vorgeschlagen, dass die zumindest eine Verformungsfläche zumindest bereichsweise schräg zu einer Axialrichtung des Gewindeelements verläuft. Dadurch kann eine besonders hohe Verformungskraft auf das Gewindeelement und/oder auf das Antriebselement ausgeübt werden.

Ferner wird vorgeschlagen, dass das Antriebselement dazu vorgesehen ist, während eines Anzugsvorgangs über die Verformungsfläche zumindest bereichsweise plastisch deformiert zu werden. Dadurch kann eine besonders zuverlässige Sicherung der Befestigungsvorrichtung erreicht werden. Ferner kann eine optische Sichtprüfung der Sicherung besonders einfach erfolgen. Besonders vorteilhaft ist das Antriebselement dazu vorgesehen, während eines Anzugsvorgangs bei einem Überschreiten einer festgelegten Vorspannkraft zumindest im Wesentlichen in Radialrichtung deformiert zu werden.

Des Weiteren wird vorgeschlagen, dass das Antriebselement dazu vorgesehen ist, bei einem Überschreiten einer maximalen Vorspannkraft frei gegenüber dem Gewindeelement zu drehen. Eine übermäßige Befestigungskraft der Befestigungsvorrichtung kann dadurch vorteilhaft vermieden werden. Eine Montagesicherheit und/oder eine Betriebssicherheit kann somit vorteilhaft erhöht werden. Besonders vorteilhaft kann eine Vorspannung unabhängig von Reibeigenschaften der Gewindepartner begrenzt werden.

Zudem wird vorgeschlagen, dass das Gewindeelement und das Antriebselement einen Kontaktbereich aufweisen, der gewindefrei ausgebildet ist. Dadurch kann die Befestigungsvorrichtung besonders günstig hergestellt werden.

Weiterhin wird vorgeschlagen, dass das Antriebselement eine Mantelwandung umfasst, die einen innenkonusförmigen Anlagebereich zu einer ständigen Anlage an der Verformungsfläche umfasst. Dadurch kann eine besonders zuverlässige Verformung des Antriebselements erzielt werden.

Ferner wird vorgeschlagen, dass sich der innenkonusförmige Anlagebereich über weniger als 30% einer Gesamtaxialerstreckung des Antriebselements erstreckt. Dadurch kann eine Verformung vorteilhaft mit einem geringen Anzugsmoment erreicht werden. Bevorzugt erstreckt sich der innenkonusförmige Anlagebereich über weniger als 20 %, besonders bevorzugt über weniger als 10 % der Gesamtaxialerstreckung des Antriebselements. Unter einer "Gesamtaxialerstreckung" soll in diesem Zusammenhang insbesondere eine Gesamterstreckung in Axialrichtung verstanden werden.

Weist die Mantelwandung im innenkonusförmigen Anlagebereich eine Wandverjüngung auf, kann eine Deformation auf einfache Weise in einem festgelegten Bereich um die Wandverjüngung herum erzielt werden. Die Wandverjüngung weist vorzugsweise eine Wandstärke auf, die weniger als 80 %, bevorzugt weniger als 50 %, besonders bevorzugt weniger als 30 % einer durchschnittlichen Wandstärke der Mantelwandung entspricht.

Des Weiteren wird vorgeschlagen, dass die Befestigungsvorrichtung ein Justierelement aufweist, das zu einer Einstellung einer maximalen Vorspannkraft vorgesehen ist. Dadurch kann auf einfache und zuverlässige Weise eine gewünschte maximale Vorspannkraft festgelegt werden. Vorteilhaft ist das Justierelement von einer Wegbegrenzungsscheibe gebildet. Bevorzugt umfasst das Justierelement ein Anschlagmittel. Das Anschlagmittel ist vorteilhaft zu einer Bewegungsbegrenzung des Gewindeelements relativ zum Antriebselement in eine Axialrichtung vorgesehen. Das Justierelement bildet besonders vorteilhaft eine Unterlegscheibe aus, die einen sich in Axialrichtung erstreckenden Innenrandkragen umfasst.

In einer zusätzlichen Ausgestaltung wird vorgeschlagen, dass die Befestigungsvorrichtung eine Verzahnungseinheit umfasst. Dadurch können besonders hohe Anzugsmomente und/oder Lösemomente zwischen dem Antriebselement und dem Gewindeelement übertragen werden. Vorteilhaft weist die Verzahnungseinheit eine erste umlaufende Verzahnung auf. Die erste umlaufende Verzahnung ist vorteilhaft entlang der Verformungsfläche angeordnet. Die erste umlaufende Verzahnung weist vorteilhaft abwechselnd steile und flache Zahnflanken auf. Die Verzahnungseinheit weist bevorzugt eine zweite umlaufende Verzahnung auf. Die zweite umlaufende Verzahnung ist vorteilhaft entlang des innenkonusförmigen Kontaktbereichs angeordnet. Die zweite umlaufende Verzahnung weist bevorzugt abwechselnd steile und flache Zahnflanken auf.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Befestigungsvorrichtung in einer perspektivischen Explosionsdarstellung,
- Fig. 2: die Befestigungsvorrichtung mit einer Schraube und zwei Platten in einer Schnittdarstellung,
- Fig. 3: die Befestigungsvorrichtung mit der Schraube und den Platten in einer weiteren Schnittdarstellung und
- Fig. 4: eine alternative Ausgestaltung einer Befestigungsvorrichtung in einer perspektivischen Darstellung.

### Beschreibung der Ausführungsbeispiele

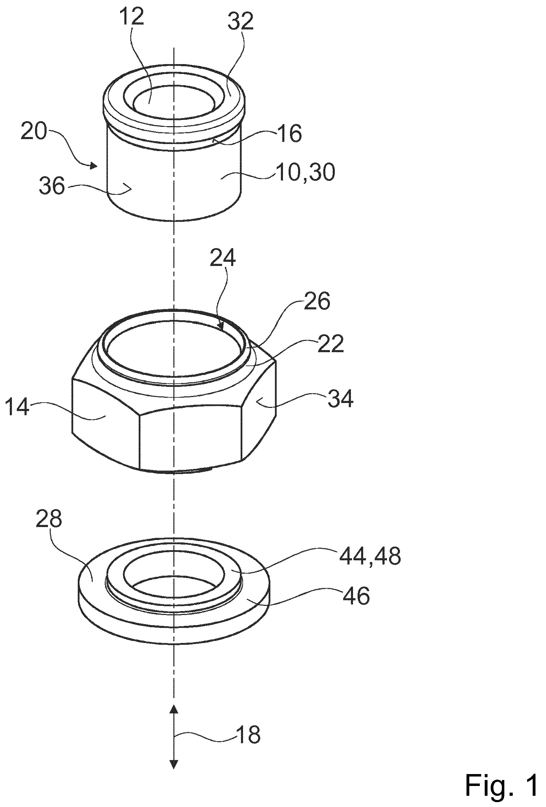

Die Figur 1 zeigt ein erstes Ausführungsbeispiel einer Befestigungsvorrichtung. Die Befestigungsvorrichtung weist ein Gewindeelement 10 auf. Das Gewindeelement 10 ist ringförmig ausgebildet. Das Gewindeelement 10 weist einen Hohlzylinder 30 auf. Ferner weist das Gewindeelement 10 einen aufgeweiteten Kragen 32 auf. Der Kragen 32 ist an den Hohlzylinder 30 angeformt. Ein Außendurchmesser des Kragens 32 ist größer als ein Außendurchmesser des Hohlzylinders 30. Der Kragen 32 weist eine Axialerstreckung von weniger als 30 % einer Axialerstreckung des Hohlzylinders 30 auf. Der Hohlzylinder 30 und der Kragen 32 sind einstückig miteinander ausgebildet. Der Hohlzylinder 30 und der Kragen 32 sind aus einem selben Bauteil herausgebildet. Das Gewindeelement 10 umfasst ein Innengewinde 12. Das Innengewinde 12 ist zur Aufnahme einer Schraube vorgesehen. Alternativ oder zusätzlich ist das Innengewinde 12 zur Aufnahme eines anderen, dem Fachmann als sinnvoll erscheinenden Gewindebauteils, wie insbesondere einer hier nicht dargestellten Gewindespindel, vorgesehen.

Die Befestigungsvorrichtung weist ein Antriebselement 14 auf. Das Antriebselement 14 ist zu einer Drehmomentübertragung von einem nicht näher gezeigten Werkzeug zum Gewindeelement 10 vorgesehen. Das Antriebselement 14 weist eine, dem Fachmann als sinnvoll erscheinende Metalllegierung auf. Das Antriebselement 14 ist ringförmig ausgebildet. Das Antriebselement 14 bildet eine Außensechskantfläche 34 aus. Das Antriebselement 14 ist zu einer direkten Kopplung mit dem Werkzeug über die Außensechskantfläche 34 vorgesehen. Das Gewindeelement 10 und das Antriebselement 14 weisen einen Kontaktbereich 20 auf, der gewindefrei ausgebildet ist. Das Gewindeelement 10 weist dabei eine glatte Mantelfläche 36 auf. Die Mantelfläche 36 steht in einem montierten Zustand in einem direkten Kontakt mit dem Antriebselement 14. Das Gewindeelement 10 ist im montierten Zustand kraftschlüssig mit dem Antriebselement 14 verbunden.

Die Befestigungsvorrichtung weist eine Verformungsfläche 16 auf. Die Verformungsfläche 16 ist dazu vorgesehen, während eines Anzugsvorgangs eine plastische Deformation am Antriebselement 14 zu erzeugen. Alternativ ist die Verformungsfläche 16 dazu vorgesehen, während eines Anzugsvorgangs eine plastische Deformation am Gewindeelement 10 zu erzeugen. Die Verformungsfläche 16 ist vom Gewindeelement 10 ausgebildet. Die Verformungsfläche 16 umläuft ringförmig den Kragen 32. Die Verformungsfläche 16 verläuft bereichsweise schräg zu einer Axialrichtung 18 des Gewindeelements 10.

Die Befestigungsvorrichtung weist ein Justierelement 28 auf. Das Justierelement 28 ist zu einer Einstellung einer maximalen Vorspannkraft vorgesehen. Das Justierelement 28 ist von einer Wegbegrenzungsscheibe gebildet. Das Justierelement 28 umfasst ein Anschlagmittel 44. Das Anschlagmittel 44 ist zu einer Bewegungsbegrenzung des Gewindeelements 10 relativ zum Antriebselement 14 in Axialrichtung 18 vorgesehen. Das Justierelement 28 bildet eine Unterlegscheibe 46 aus. Die Unterlegscheibe 46 umfasst einen sich in Axialrichtung 18 erstreckenden Innenrandkragen 48. Es ist in diesem Zusammenhang auch denkbar, dass die Befestigungsvorrichtung kein Justierelement aufweist. In diesem Fall bildet das zu befestigende Bauteil oder eine gewöhnliche Unterlegscheibe ein Anschlagmittel zu einer Bewegungsbegrenzung des Gewindeelements 10 aus.

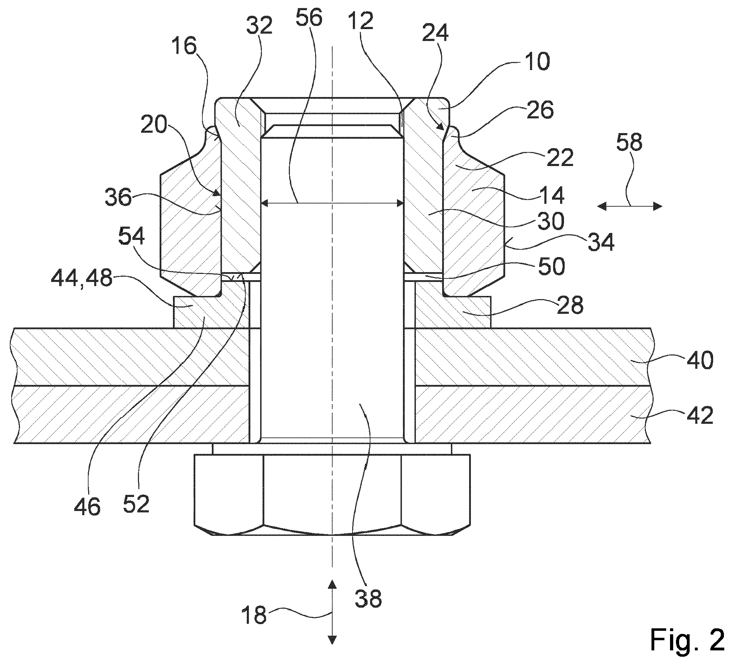

In der Figur 2 ist die Befestigungsvorrichtung in einer Ausgangsposition, also vor einem Anzugsvorgang, dargestellt. Das Gewindeelement 10 ist dabei auf eine Schraube 38 aufgedreht. Die Befestigungsvorrichtung ist dazu vorgesehen, in Zusammenwirkung mit der Schraube 38 zwei Platten 40, 42 miteinander zu verbinden. Das Gewindeelement 10 ist kraftschlüssig mit dem Antriebselement 14 verbunden. Das Justierelement 28 ist in Axialrichtung 18 betrachtet an einem freien Ende des Antriebselements 14 angeordnet. Das Justierelement 28 ist mit dem Antriebselement 14 verklemmt. Es ist auch denkbar, dass das Justierelement 28 auf eine andere, dem Fachmann als sinnvoll erscheinende Weise, wie insbesondere stoffschlüssig, bevorzugt über einen Klebstoff, mit dem Antriebselement 14 verbunden ist. Ebenfalls ist es denkbar, dass das Antriebselement 14 und das Justierelement 28 einstückig aus einem selben Bauteil ausgebildet sind.

Zwischen dem Gewindeelement 10 und dem Antriebselement 14 ist in Axialrichtung 18 ein Spalt 50 angeordnet. Das Gewindeelement 10 weist eine Anschlagfläche 52 auf. Die Anschlagfläche 52 erstreckt sich senkrecht zur Axialrichtung 18. Das Antriebselement 14 weist eine Anschlagfläche 54 auf. Die Anschlagfläche 54 erstreckt sich senkrecht zur Axialrichtung 18. Die Anschlagfläche 52 des Gewindeelements 10 und eine Anschlagfläche 54 des Antriebselements 14 sind voneinander beabstandet. Ein Abstand zwischen der Anschlagfläche 52 des Gewindeelements 10 und der Anschlagfläche 54 des Antriebselements 14 beträgt weniger als 10 % eines Gewindedurchmessers 56 des Gewindeelements 10.

Das Justierelement 28 liegt an der zu befestigenden Platte 40 an. Das Antriebselement 14 liegt am Justierelement 28 an. Eine weitere Bewegung des Antriebselements 14 in Richtung der Platte 40 ist dadurch vermieden. Das Antriebselement 14 umfasst eine Mantelwandung 22. Die Mantelwandung 22 umfasst einen innenkonusförmigen Anlagebereich 24. Der innenkonusförmige Anlagebereich 24 ist zur ständigen Anlage an der Verformungsfläche 16 vorgesehen. Der innenkonusförmige Anlagebereich 24 erstreckt sich über weniger als 20 % einer Gesamtaxialerstreckung des Antriebselements 14. Die Mantelwandung 22 weist im innenkonusförmigen Anlagebereich 24 eine Wandverjüngung 26 auf. Die Wandverjüngung 26 weist eine Wandstärke auf, die weniger als 30 % einer durchschnittlichen Wandstärke der Mantelwandung 22 entspricht. Das Gewindeelement 10 liegt mit der Verformungsfläche 16 am innenkonusförmigen Anlagebereich 24 an.

Ein Anzugsvorgang bildet einen Arbeitsschritt, in welchem eine Vorspannkraft überschritten wird, die ausreichend ist, um die Mantelwandung 22 durch die Verformungsfläche 16 zu deformieren. Das Gewindeelement 10 wird beim Anzugsvorgang relativ zum Antriebselement 14 in Axialrichtung 18 bewegt. Die Verformungsfläche 16 weitet das Antriebselement 14 bereichsweise auf. Das Antriebselement 14 ist dazu vorgesehen, während des Anzugsvorgangs über die Verformungsfläche 16 bereichsweise plastisch deformiert zu werden. Bei der plastischen Deformation wird das Antriebselement 14 bereichsweise um zumindest 0,5 mm deformiert.

Das Antriebselement 14 ist dazu vorgesehen, während des Anzugsvorgangs bei einem Überschreiten der Vorspannkraft zumindest im Wesentlichen in Radialrichtung 58 deformiert zu werden. Dabei entsteht eine erhöhte Reibkraft zwischen dem Gewindeelement 10 und der Schraube 38 in Axialrichtung 18. Am Anlagebereich 24 entsteht eine erhöhte Reibkraft. Die beiden Reibkräfte können ein ungewolltes Lösen der Befestigungsvorrichtung von der Schraube 38 vermeiden.

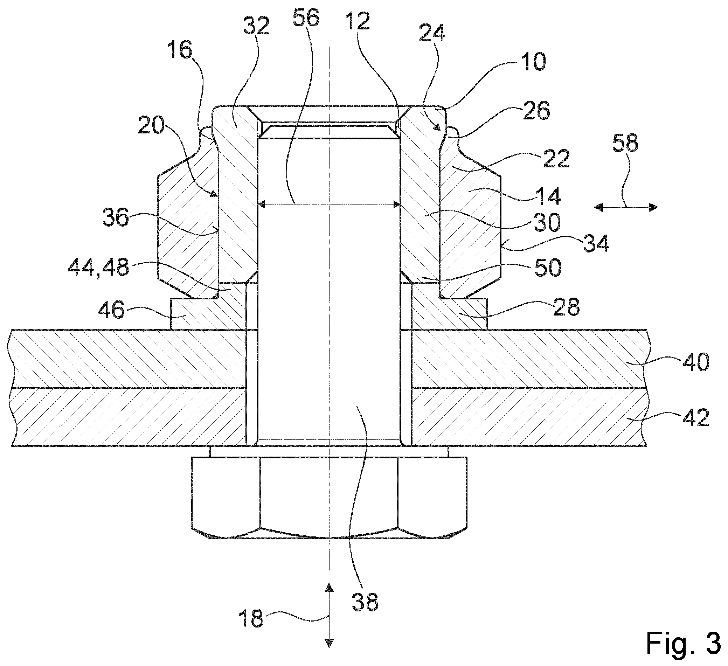

Die Figur 3 zeigt die Befestigungsvorrichtung in einem montierten Zustand. Die Anschlagfläche 52 des Gewindeelements 10 und die Anschlagfläche 54 des Antriebselements 14 liegen aneinander an. Eine weitere Bewegung des Gewindeelements 10 in Axialrichtung 18 ist vermieden. Das Antriebselement 14 ist dazu vorgesehen, bei einem Überschreiten der maximalen Vorspannkraft frei gegenüber dem Gewindeelement 10 zu drehen. Wird die Vorspannkraft weiter erhöht, überwindet die glatte Mantelfläche 36 des Gewindeelements 10 eine Reibkraft am Antriebselement 14 und rutscht durch. Das Justierelement 28 bestimmt durch eine Höhe des Innenrandkragens 48, wie weit sich das Gewindeelement 10 relativ zum Antriebselement 14 in Axialrichtung 18 bewegen kann. Es ist hierbei denkbar, dass das Justierelement 28 austauschbar ausgebildet ist. Für eine bestimmte gewünschte Vorspannkraft kann ein Bediener ein entsprechendes Justierelement 28 in das Antriebselement 14 einklemmen. Das Justierelement 28 kann beispielsweise aus Metall und/oder bevorzugt aus Kunststoff ausgebildet sein.

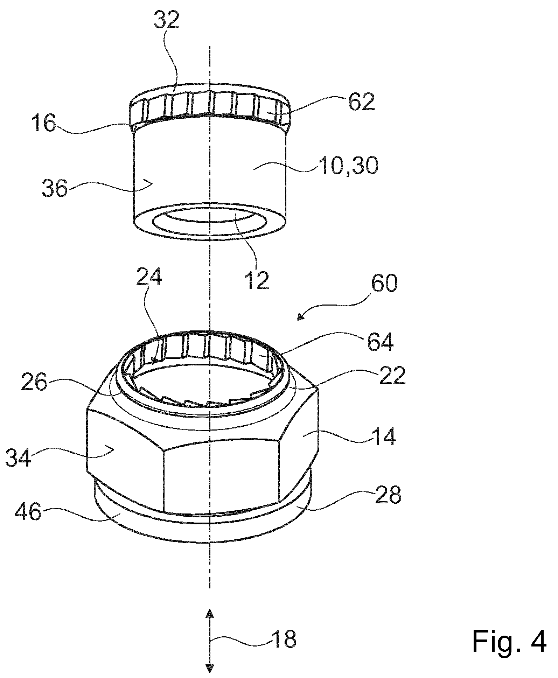

Ein Lösen der Befestigungsvorrichtung ist über eine Drehung des Antriebselements 14 möglich. Dabei muss die Reibkraft des Kontaktbereichs 20 überwunden werden. Um ein Lösen auch bei erschwerten Bedingungen, wie beispielsweise Korrosion und/oder einem beschädigten Gewinde zu ermöglichen, kann die Befestigungsvorrichtung in einer alternativen Ausgestaltung eine Verzahnungseinheit 60 aufweisen, wie in der Figur 4 gezeigt.

Die Verzahnungseinheit 60 weist eine erste umlaufende Verzahnung 62 auf. Die erste umlaufende Verzahnung 62 ist entlang der Verformungsfläche 16 angeordnet. Die erste umlaufende Verzahnung 62 weist abwechselnd steile und flache Zahnflanken auf. Die Verzahnungseinheit 60 weist eine zweite umlaufende Verzahnung 64 auf. Die zweite umlaufende Verzahnung 64 ist entlang des innenkonusförmigen Kontaktbereichs 20 angeordnet. Die zweite umlaufende Verzahnung 64 weist abwechselnd steile und flache Zahnflanken auf. Bei einem Anzugsvorgang kann ein Drehmoment über die flachen Zahnflanken übertragen werden. Bei einem Überschreiten eines maximalen Drehmoments können die Verzahnungen 62, 64 über die flachen Zahnflanken gleiten. Bei einem Lösen des Gewindeelements 10 greifen die steilen Flanken der Verzahnungen 62, 64 ineinander. Dadurch können besonders hohe Drehmomente zum Lösen der Befestigungsvorrichtung erzielt werden.

## Patentansprüche

1. Befestigungsvorrichtung mit einem Gewindeelement (10), das ein
Innengewinde (12) umfasst, und mit einem Antriebselement (14), das zu einer Drehmomentübertragung von einem Werkzeug zum Gewindeelement (10) vorgesehen ist, und mit zumindest einer Verformungsfläche (16), die dazu vorgesehen ist, während eines Anzugsvorgangs zumindest eine plastische Deformation am Gewindeelement (10) und/oder am Antriebselement (14) zu erzeugen.

2. Befestigungsvorrichtung nach Anspruch 1,
**dadurch gekennzeichnet, dass**
die zumindest eine Verformungsfläche (16) vom Gewindeelement (10) ausgebildet ist.

3. Befestigungsvorrichtung nach Anspruch 1 oder 2,
**dadurch gekennzeichnet, dass**
die zumindest eine Verformungsfläche (16) zumindest bereichsweise schräg zu einer Axialrichtung (18) des Gewindeelements (10) verläuft.

4. Befestigungsvorrichtung nach einem der vorhergehenden Ansprüche,
**dadurch gekennzeichnet, dass** das Antriebselement (14) dazu vorgesehen ist, während eines Anzugsvorgangs über die Verformungsfläche (16) zumindest bereichsweise plastisch deformiert zu werden.

5. Befestigungsvorrichtung nach einem der vorhergehenden Ansprüche,
**dadurch gekennzeichnet, dass**
das Antriebselement (14) dazu vorgesehen ist, bei einem Überschreiten einer maximalen Vorspannkraft frei gegenüber dem Gewindeelement (10) zu drehen.

6. Befestigungsvorrichtung nach einem der vorhergehenden Ansprüche,
**dadurch gekennzeichnet, dass**
das Gewindeelement (10) und das Antriebselement (14) einen Kontaktbereich (20) aufweisen, der gewindefrei ausgebildet ist.

7. Befestigungsvorrichtung nach einem der vorhergehenden Ansprüche, **dadurch gekennzeichnet, dass**
das Antriebselement (14) eine Mantelwandung (22) umfasst, die einen innenkonusförmigen Anlagebereich (24) zur ständigen Anlage an der Verformungsfläche (16) umfasst.

8. Befestigungsvorrichtung nach Anspruch 7,
**dadurch gekennzeichnet, dass**
sich der innenkonusförmige Anlagebereich (24) über weniger als 30% einer Gesamtaxialerstreckung des Antriebselements (14) erstreckt.

9. Befestigungsvorrichtung nach Anspruch 7 oder 8,
**dadurch gekennzeichnet, dass**
die Mantelwandung (22) im innenkonusförmigen Anlagebereich (24) eine Wandverjüngung (26) aufweist.

10. Befestigungsvorrichtung nach einem der vorhergehenden Ansprüche, **gekennzeichnet durch**
ein Justierelement (28), das zu einer Einstellung eines maximalen Anzugsmoments vorgesehen ist.
